(19) Europäisches Patentamt
European Patent Office
Office européen des brevets

(11) Publication number: 0 057 325 A1

# (12) EUROPEAN PATENT APPLICATION

(21) Application number: 81306028.2

(22) Date of filing: 22.12.81

(51) Int. Cl.³: C 09 D 3/58, C 09 D 7/12, C 08 G 59/56, C 08 K 5/34

(30) Priority: 31.12.80 US 221610

(43) Date of publication of application: 11.08.82 Bulletin 82/32

(84) Designated Contracting States: BE DE FR GB IT NL

(71) Applicant: MOBIL OIL CORPORATION, 150 East 42nd Street, New York New York 10017 (US)

(72) Inventor: Kaufman, Marvin Leonard, 129 Chelsea Way, Bridgewater New Jersey (US)

(74) Representative: Cooper, John Anthony et al, Mobil Court 3 Clements Inn, London WC2A 2EB (GB)

(54) **Epoxy-coating composition containing a hardener and an accelerator.**

(57) This invention provides a coating composition comprising at least one 1,2 epoxy resin, a modified imidazole catalyst, and a polyfunctional phenol or polyfunctional acid or dicyandiamide.

EP 0 057 325 A1

TITLE MODIFIED see front page



# COATING COMPOSITIONS HAVING DUAL CURING MECHANISMS

This invention is concerned with epoxy resin coating compositions.

This invention provides improved epoxy coating compositions that give cured coatings of varying crosslink density comprising at least one 1,2 epoxy resin, a modified imidazole catalyst, and a polyfunctional phenol or polyfunctional acid or dicyandiamide.

In U. S. Application Serial No. 065,664 filed August 10, 1979, there is disclosed modified imidazole catalysts for epoxy resins and powder coatings containing them.

The epoxy resin in the coating composition of this invention can be any 1,2-polyepoxy resin. Preferred resins are the diglycidyl ethers of bisphenols, particularly bisphenol A, and novolaks having a WPE (weight per epoxy) of between about 175 and about 4500. The choice of epoxy resins will depend upon the coating composition contemplated. For example, epoxy resins of $>$ 450 WPE can be used in powder coatings, wherein higher molecular weight resins are preferable. The lower molecular weight epoxy resins having a WPE between about 175 and about 450 can be used to prepare solution coatings, particularly high solids coating compositions. It is also contemplated to use small amounts of monoepoxy resins to control chain length.

The modified imidazole catalysts are disclosed in U. S. Application Serial No. 65,664, filed August 10, 1979. In brief, the modified imidazole catalysts (curing agents) comprise an imidazole having the formula:

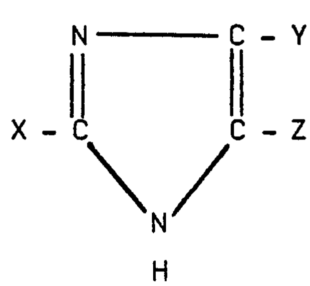

wherein X is hydrogen, methyl, ethyl, or phenyl and Y and Z are hydrogen or ethyl, methyl modified by addition of $C_1$ - $C_{18}$ alkyl (meth) acrylate, by addition of a diglycidyl ether of a bisphenol or a 1,2 - monoepoxide, or by carbamoylation; followed by neutralization with a lower fatty acid, a lower alkylene dicarboxylic acid, or an aromatic polycarboxylic acid.

The curing mechanism catalyzed by the modified imidazole is based on the homopolymerization of the epoxy resin with crosslinking. With this formulation in powder coatings, high molecular weight epoxy resins had to be used so that the crosslink density would be low enough to give useful properties.

In order to use lower molecular weight, epoxy resins and to vary the properties of the cured coatings, it is necessary to include polyfunctional phenols, polyfunctional acids, or dicyandiamide whose reaction with epoxy resins is also catalyzed by modified imidazoles. By including such polyfunctional materials, the structure of the cured polymer can be modified from a highly crosslinked polymer (homopolymer with no added polyfunctional) to a more linear polymer. Using suitable variations in the molecular weight of the epoxy resin, the polyfunctional group reactants and the ratio of these, cured polymeric coatings of varying crosslink density and properties are obtained.

The polyfunctional materials are polycarboxylic aliphatic and aromatic acids, polyphenols, and dicyandiamide. Non-limiting examples include succinic acid, glutaric acid, adipic acid, pimelic acid, suberic acid, azelaic acid, sebacic acid, phthalic acid, isophthalic acid, maleic acid, aconitic acid, diphenols, such as bisphenol A, low molecular weight novolacs, and low molecular weight resoles.

The amount of modified imidazole catalyst used is in a ratio of between about 30:1 and about 1:1, expressed as the ratio of epoxide equivalents: imidazole equivalents. Preferably, the ratio is about 5-20:1. The amount of polyfunctional material used is between about 10 percent and about 150 percent of the equivalents of epoxy resin and polyfunctional material.

The coating composition can be a powder coating or a solution coating, particularly when the epoxy resin is a low molecular weight liquid resin. Depending upon the molecular weight of the epoxy resin, the coating solids content can be between about 35 percent and about 100 percent.

The solvents utilizable in solution coating compositions include alkoxyethanols having the formula $ROCH_2CH_2OH$ where R is $C_5$-$C_7$, $C_4$-$C_6$ alcohols, $C_4$-$C_6$ ketones, $C_5$-$C_{10}$ Carbitols, and acetates of the alcohols, ethoxyethanol, and Carbitols. Mixtures of two or more solvents are contemplated.

## Example 1

A solution of 150 g. DER 663V (WPE = 750), 150 g. methyl ethyl ketone (MEK), and 10.7 g. imidazole catalyst. This catalyst was the imidazole modified by addition of Epon 828 (WPE = 192) and neutralized with one equivalent of phthalic acid. Fifty gram aliquots were added varying amounts of bisphenol A (BPA), adipic acid, or dicyandiamide (DiCy). Drawdowns of the solutions were made on steel panels and cured at 149°C (300°F) for 15 minutes. Results are set forth in Table I.

TABLE I

| Base Solution | Additive (equivalent %) | Reverse Impact | MEK DR |
|---|---|---|---|
| 50 g (0.034 eq) | -- | 160+ | 200 |
| " | BPA (25) | 160+ | 200 |
| " | " (50) | 160+ | 200 |
| " | " (100) | 160 | 200 |
| " | Adipic Acid (25) | 160+ | |
| " | " (50) | 160+ | |
| " | " (100) | 160+ | |
| " | DiCy (14) | 160+ | |
| " | " (69) | 160+ | |
| " | " (140) | 160+ | |

Example 2

Solution coatings were made and tested as described in Example 1, except that the epoxy resin was low molecular weight Epon 828 (WPE = 192). Drawdowns were made and tested as in Example 1. Results are set forth in Table II.

TABLE II

| Epon 828 | Additive (equivalent %) | Reverse Impact | MEK DR |
|---|---|---|---|
| " | -- | 160 | 200 |
| " | BPA (50%) | 160+ | 200 |
| " | Adipic Acid (50%) | 160 | 200 |

Example 3

The utility of the invention can also be demonstrated in powder coating compositions. The following composition based on DER 663U and 1828Ph (imidazole + 828 + 1 mole phthalic acid) catalysts at a 15/1 epoxy equivalent to Imidazole equivalent ratio were pigmented at 25 wt. percent pigment. Three coatings were made and tested. The data is shown in Table III for 50.8 µm (2 mil) films cured 10 minutes at 149°C (300°F).

TABLE III

| Sample No. | Equivalent % BPA | Reverse Impact |
|---|---|---|
| 1126 | 0 | 32 |
| 1125 | 25 | 92 |
| 1124 | 50 | 100 |

CLAIMS:

1. A coating composition comprising at least one 1,2 epoxy resin, a modified imidazole catalyst, and a polyfunctional phenol, polyfunctional acid, or dicyandiamide.

2. A coating composition of Claim 1, wherein the epoxy resin is a diglycidyl ether of bisphenol A having a WPE of about 750 and the catalyst is imidazole modified with a digycidyl ether of bisphenol A having a WPE of about 192 and phthalic acid.

3. A coating composition of Claims 1 or 2, wherein the polyfunctional phenol is bisphenol A.

4. A coating composition of Claims 1 or 2, wherein the polyfunctional acid is adipic acid.

5. A coating composition of Claim 2 containing dicyandiamide.

6. A coating composition of Claim 1, wherein the epoxy resin is a diglycidyl ether of bisphenol A having a WPE of about 192 and the catalyst is imidazole modified with a diglycidyl ether of bisphenol A having a WPE of about 192 and phthalic acid.

7. A coating composition of Claim 6, wherein the polyfunctional phenol is bisphenol A.

8. A coating composition of Claim 6, wherein the polyfunctional acid is adipic acid.

European Patent Office

# EUROPEAN SEARCH REPORT

0057325

Application number
EP 81306028.2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | GB - A - 1 215 683 (SHELL INTERNATIONALE RESEARCH MAATSCHAPPIJ N.V.) * Claims 3,8-12,14,16,17,21,24; page 2 - page 3, line 16; page 4, lines 25,26,33; page 5, lines 13,14,30-36; page 6, lines 27-46; examples 6, 9-12 * ---- | 1,2,5, 6 | C 09 D 3/58<br>C 09 D 7/12<br>C 08 G 59/56<br>C 08 K 5/34 |

TECHNICAL FIELDS SEARCHED (Int.Cl. 3)

C 09 D
C 08 G 59/00
C 08 K

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 10-03-1982 | PAMMINGER |